# EUROPÄISCHE PATENTANMELDUNG

(11) **EP 4 751 997 A1**
(43) Veröffentlichungstag der Anmeldung: **03.06.2026**
(21) Anmeldenummer: 25219157.2
(22) Anmeldetag: 27.11.2025
(51) Int. Cl.: B60P 1/28

(54) **AUFBAUEINHEIT**

(30) Priorität: 27.11.2024 DE 102024135091
(71) Anmelder: Manfred Sirch GmbH & Co. KG, 87600 Kaufbeuren (DE)
(72) Erfinder: Sirch, Markus, 87600 Kaufbeuren (DE)
(74) Vertreter: VKK Patentanwälte PartG mbB

(57) **Zusammenfassung**

Aufbaueinheit (1) für Schienen- und Kraftfahrzeuge zum Transport von Steinblöcken aufweisend eine, einen Aufnahmeraum (2) aufspannende, Rahmeneinheit (3), wobei die Rahmeneinheit (3) eine Grundfläche (4), zwei einander gegenüberliegende Seitenebenen (5, 6) und zwei, jeweils orthogonal zu beiden Seitenebenen (5, 6) angeordnete, Stirnebenen (7, 8) definiert und mindestens eine in dem Aufnahmeraum (2) angeordnete flexible Lastaufnahme (9) aufweist, wobei die Lastaufnahme (9) ausschließlich in einem oberen Randbereich (10) der Rahmeneinheit (3) an dieser anliegt und Lastaufnahme (9) und Rahmeneinheit (3) in dem oberen Randbereich (10) kraft-, stoff- oder formschlüssig miteinander verbunden sind, wobei die Lastaufnahme (9) mindestens eine erste Öffnung (11) aufweist und wobei die Lastaufnahme (9) aus einem verschleiß- und abriebfesten Material, gebildet ist.

## Beschreibung

Die vorliegende Erfindung betrifft eine Aufbaueinheit für Schienen- und Kraftfahrzeuge zum Transport von Steinblöcken, insbesondere mindestens von der Größe von Wasserbausteinen, aufweisend eine, einen Aufnahmeraum aufspannende, Rahmeneinheit und mindestens eine in dem Aufnahmeraum angeordnete flexible Lastaufnahme, wobei die Lastaufnahme ausschließlich in einem oberen Randbereich der Rahmeneinheit an dieser anliegt und Lastaufnahme und Rahmeneinheit in dem oberen Randbereich kraft-, stoff- oder formschlüssig miteinander verbunden sind.

Zu Befestigungszwecken u.a. an Hängen sowie im Wasserbau, insbesondere in Uferbereichen von Gewässern, werden häufig große Steinblöcke oder Findlinge eingesetzt, die der Erosion der Gebiete entgegenwirken und/oder ein Abrutschen des Geländes zumindest erschweren sollen. Derartige Steinblöcke können ein Gewicht von bis zu acht Tonnen aufweisen, was ihren Transport mit Straßen- und Schienenfahrzeugen von einem Steinbruch zu der jeweiligen Bedarfsfläche nahelegt. Eine Schwierigkeit des Transports solcher Steinblöcke stellt das Be- und Entladen der jeweiligen Transportfahrzeuge dar.

Beim Transport von Schüttgut wird üblicherweise eine Aufbaueinheit mit schwenkbarer Klappe verwendet, wobei die Aufbaueinheit beim Entladen in Richtung der Klappe geschwenkt wird, sodass das Schüttgut durch die Schwerkraft nach und nach aus der Aufbaueinheit herausrutscht. Beim Entladen der für die Erfindung relevanten sehr schweren und großen Steinblöcke gerät dabei eine sehr große Masse in Bewegung, so dass oftmals eine Beschädigung der Klappe beim Entladen auftritt. Auch während des Transports treten bei Geschwindigkeitsänderungen des Fahrzeugs einschließlich des Durchfahrens von Kurven Kräfte auf die Steinblöcke in der Aufbaueinheit auf, die dadurch ungewollte und unkontrollierte Bewegungen ausführen, was oftmals zu einer Beschädigungen an Klappe und Aufbaueinheit führt. Beide Bauteile der bekannten Aufbaueinheiten sind daher oftmals sehr massiv und mit entsprechenden Materialstärken gebaut, um den auftretenden Belastungen über eine längere Zeit standhalten zu können.

Dieser massiven Bauweise sind jedoch durch das übliche zulässige Gesamtgewicht von 35 Tonnen Grenzen gesetzt. Damit ist auch die Möglichkeit beschränkt, möglichst viele Steinblöcke gleichzeitig zu transportieren.

Aus der DE 14 30 225 ist ein Aufbau für Fahrzeuge zum wahlweisen Transport von flüssigem, pulverförmigem oder stückigem Gut bekannt. Dieser Aufbau weist eine Ladeplattform und diese umschließende Seitenwände sowie eine hochliegende, tragende Halterung für mindestens eine als Behälter dienende biegsame Hülle auf. Die tragende Halterung weist weiter eine Aufwickelwalze zum Aufwickeln der biegsamen Hülle im ungefüllten Zustand auf. Die biegsame Hülle liegt im gefüllten Zustand auf der Ladeplattform auf.

Aus der US 5,402,732 ist eine Umrüstvorrichtung zum Transportieren eines fließfähigen Materials in einem oben offenen Eisenbahnwaggon bekannt. Diese Umrüstvorrichtung umfasst einen langgestreckten zentralen Träger mit einer Vielzahl von Verbindungsmitteln zum lösbaren Anbringen einer Vielzahl von materialaufnehmenden Blasen an dem zentralen Träger. Sie umfasst weiter Greifmittel, die den zentralen Träger und alle daran befestigten Blasen nach oben anheben.

Die DE 23 08 029 C3 offenbart ein Fahrzeug für den wahlweisen Transport von festen oder pulverförmigen bzw. flüssigen Gütern, wobei für den Transport der letzteren ein zusammenlegbarer Behälter mit fester Decke beschrieben ist, dessen Seitenwände aus flexiblem, druckfestem und flüssigkeitsdichtem Werkstoff hergestellt sind und der einen unten mit einer Entleerungsöffnung versehenen, allseitig zu dieser Öffnung geneigten Auflageboden aufweist.

Die EP 2 736 765 B1 offenbart eine Aufbaueinheit für ein Kraftfahrzeug zum Transport von schweren Gegenständen, wobei diese Aufbaueinheit einen gerundeten Boden aufweist und am Fahrzeugende eine erste Öffnung aufweist. Diese ist nach oben gerichtet und erstreckt sich über eine erste Stirnebene. Der runde Boden ist über Zugverbindungsmittel mit einem Gestell des Fahrzeugs verbunden, die in Ausnehmungen des Bodens eingreifen und eine relative Bewegung zwischen Boden und Fahrzeug ermöglichen. Der Boden ist dabei nur an den beiden Seiten der Rahmeneinheit befestigt. Die Rahmeneinheit weist vier in etwa u-förmige, nach Art einer Hängemattenaufhängung geformte Querträger und zwei Längsträger in Form von Doppel-T-Trägern auf. Die Befestigung des Bodens erfolgt über Zuganker. Nachteilig an diesem Stand der Technik ist die geringe Robustheit und Belastbarkeit der flexiblen Elemente, sodass diese nicht im Stande sind, die Last des zu erfindungsgemäß zu transportierenden Gutes aufzunehmen.

Die vorliegende Erfindung stellt sich daher die Aufgabe eine stabile und gleichzeitig möglichst leichte Aufbaueinheit vorzuschlagen.

Diese Aufgabe wird gelöst durch eine Aufbaueinheit für Schienen- und Kraftfahrzeuge zum Transport von Steinblöcken aufweisend eine, einen Aufnahmeraum aufspannende, Rahmeneinheit, wobei die Rahmeneinheit eine Grundfläche, zwei einander gegenüberliegende Seitenebenen und zwei, jeweils orthogonal zu beiden Seitenebenen angeordnete, Stirnebenen definiert und mindestens eine in dem Aufnahmeraum angeordnete flexible Lastaufnahme aufweist, wobei die Lastaufnahme ausschließlich in einem oberen Randbereich der Rahmeneinheit an dieser anliegt und Lastaufnahme und Rahmeneinheit in dem oberen Randbereich kraft-, stoff- oder formschlüssig miteinander verbunden sind, wobei die Lastaufnahme mindestens eine erste Öffnung aufweist und wobei die Lastaufnahme aus einem verschleiß- und abriebfesten Material, gebildet ist. Hierbei ist dieses Material bevorzugt ein Stahl mit extrahoher Zähigkeit.

Die Rahmeneinheit ist erfindungsgemäß aus mehreren stoff-, form- oder kraftschlüssig verbundenen Rahmenelementen zusammengesetzt, wobei diese Rahmenelemente aus einem Metall, insbesondere aus hochlegiertem Stahl, Edelstahl oder einem anderen korrosionsbeständigen Metall hergestellt sind. Die Rahmenelemente an sich weisen für Stahlstreben übliche Querschnittsformen, insbesondere U-, T-, oder Doppel-T-Formen auf und sind bevorzugt Standardprofile. Die Rahmenelemente sind insbesondere mittels Schweißen, Kleben, Schrauben oder Nieten erfindungsgemäß miteinander verbunden. Die Rahmenelemente sind bevorzugt in Fachwerkbauweise zueinander angeordnet, sodass der gebildete Rahmen eine größtmögliche Steifigkeit aufweist und Lasten optimal verteilt werden. Die Fachwerkbauweise ist als solche definiert, die die Rahmeneinheit mindestens ein vertikal orientiertes Rahmenelement als Pfosten und mindestens ein horizontal orientiertes Rahmenelement als Latte umfasst. Bevorzugt umfasst die in Fachwerkbauweise ausgebildete Rahmeneinheit weiter mindestens ein schräg zu dem Pfosten und der Latte orientiertes Rahmenelement als Querbalken. Der Querbalken ist in dem, durch den mindestens einen Pfosten und die mindestens eine Latte gebildeten, Freiraum positioniert. Vorteilhafterweise sind der Pfosten und die Latte, und insbesondere der Querbalken, unmittelbar miteinander verbunden, insbesondere verschweißt. Die Positionierung des Pfostens, der Latte und insbesondere des Querbalkens ist lastabhängig. Die Querschnittsform und Profildicke der Rahmenelemente sind in Abhängigkeit von der im Benutzungsfall zu tragenden Last an der entsprechenden Position gewählt, können sich also von Rahmen zu Rahmen unterscheiden. Der Rahmen selber ist vorzugsweise quaderförmig ausgebildet, insbesondere in solchen Maßen, dass er auf einen Lkw-Tiefladeranhänger und/oder einen üblichen Lkw als Containertransporter und/oder einen Eisenbahn Containertragwagen passt. Die Seiten- und Stirnebenen sind erfindungsgemäß abwechselnd an jeweils einer Seitenkante der Grundfläche angeordnet, sodass die Grundfläche die Basis bildet für mittels der Aufbaueinheit zu transportierende Güter. Der obere Rand der Rahmeneinheit ist bevorzugt gebildet durch einen gekanteten Abschlussrahmen aus hochfestem Stahl. Der obere Rand der Rahmeneinheit stellt eine Auflagefläche bereit, an die Lastaufnahme anlegbar ist, sodass die Lastaufnahme bevorzugt über auftretende Scherkräfte zwischen der Lastaufnahme und der Auflagefläche des oberen Randes der Rahmeneinheit in Position gehalten wird. Bevorzugt ist der obere Rand daher von der Lastaufnahme mindestens teilweise umschlossen. Als oberen Rand der Rahmeneinheit ist bevorzugt der Bereich der Rahmeneinheit zu verstehen, die in einer Seitenansicht auf die Aufbaueinheit in einem oberen Drittel, bevorzugt in den oberen 20%, besonders bevorzugt in den oberen 10% der Gesamthöhe der Aufbaueinheit angeordnet ist. Vorteilhaft ist der obere Rand durch eine der mindestens einen Rahmenelemente als Latte definiert, die eine oberste Latte der Aufbaueinheit bildet. Diese oberste Latte ist bevorzugt an mindestens zwei Seitenflächen, bevorzugt mindestens drei Seitenflächen von der Lastaufnahme umschlossen.

Im Benutzungszustand auf einem Fahrzeug ist die Grundfläche im Wesentlichen parallel zu der unter ihr befindlichen Fahrzeugauflage. Die flexible Lastaufnahme ist so an der Rahmeneinheit angeordnet, dass deren Abstand von den Seitenebenen und der Grundfläche je nach Belastung variabel ist. So sind insbesondere auftretende Querkräfte bei einer Kurvenfahrt durch die flexible Lastaufnahme in den oberen Randbereich übertragbar, ohne dabei eine große Querbelastung auf die Rahmeneinheit und damit auf das Fahrzeug zu übertragen. Durch die Flexibilität der Lastaufnahme ist die Gefahr vermindert, dass Querkräfte größer werden als der Reibwiderstand zwischen dem transportierten Gut, insbesondere einem Steinblock und der Lastaufnahme und damit die Gefahr, dass der Steinblock ruckartig in Bewegung kommt. Eine hohe Belastung durch die schweren Steinblöcke als Güter wird aufgrund der Flexibilität der Lastaufnahme so auf die Rahmeneinheit übertragen, dass an dieser stets eine im Wesentlichen breite Lastverteilung auftritt. Die aufgrund von Beschleunigungen während einer Bewegung der Aufbaueinheit erzeugten Beschleunigungen von auf der Lastaufnahme gelagerten Steinblöcken oder anderen Gütern erzeugen eine zusätzliche Belastung der Aufbaueinheit, welche im schlimmsten Fall ein Kippen der Aufbaueinheit erwirkt. Durch die Beweglichkeit der Lastaufnahme relativ zur Rahmeneinheit sind diese Beschleunigungen zumindest teilweise aufnehmbar, sodass der Gesamtbelastung auf die Aufbaueinheit reduziert ist.

Zudem ist die Rahmeneinheit derart ausgebildet, dass auftretende Kräfte stets in den oberen, besonders stabilen, Randbereich und insbesondere keine Querkräfte in einem unterhalb des oberen Randbereichs liegenden Bereich eingeleitet werden. Durch die Befestigung der Lastaufnahme ausschließlich an dem oberen Randbereich werden ausgehend von der Lastaufnahme und insbesondere von darauf angeordneten Gütern erwirkte Kräfte stets ausschließlich an dem oberen Randbereich in die Rahmeinheit eingeführt. Durch das Umfassen des oberen Randbereichs durch die Lastaufnahme werden die ankommenden Kräfte stets im Wesentlichen vertikal in die Rahmeneinheit eingeführt. Die Lastaufnahme bildet bevorzugt einen den oberen Randbereich aufnehmende Lasche.

Der obere Randbereich ist besonders bevorzugt über die gesamte Länge der Rahmeneinheit von der Lastaufnahme umschlossen, um eine möglichst große Anlagefläche zwischen Lastaufnahme und dem oberen Randbereich zu bilden. Dies erleichtert eine gewichtsreduzierte Bauweise aus einer massiven Rahmeneinheit und einer eher leichten, "hängemattenähnlichen" Lastaufnahme erheblich. Aufgrund der erfindungsgemäßen Anbindung der Lastaufnahme in die Rahmeneinheit nur in einem oberen Randbereich ist die Lastaufnahme bei Beschädigung einfach demontier- und austauschbar. Auch die Verbindung zwischen Lastaufnahme und Rahmeneinheit erfolgt bevorzugt über Schweißen, Kleben, Pressen, Schrauben, Nieten oder Scheren. Die erfindungsgemäß vorgesehen Öffnung der Lastaufnahme dient zur Be- und Entladung der Steinblöcke, wobei die Öffnung erfindungsgemäß nicht vollumfänglich von Material der Lastaufnahme umgeben sein muss. Die Lastaufnahme ist erfindungsgemäß als gebogenes Blech ausgebildet und weist eine hohe Zähigkeit und einen hohen Reibwiderstand auf, sodass das Blech der Lastaufnahme sowohl mechanischen Schlägen standhält als auch verhindert, dass Steinblöcke schon bei geringen Beschleunigungen oder Querkräften ins Rutschen geraten. Die Lastaufnahme weist eine Materialstärke von maximal 20 mm, bevorzugt maximal 15 mm, besonders bevorzugt von maximal 10 mm auf und kann an unterschiedlichen Stellen unterschiedliche Materialstärken aufweisen.

In Weiterbildung der Erfindung ist vorgesehen, dass sich die Lastaufnahme zwischen den Seitenebenen erstreckt, insbesondere sich über die gesamte Grundfläche der Rahmeneinheit erstreckt. Erstreckt sich die Lastaufnahme über die gesamte Grundfläche, werden die auftretenden Belastung räumlich weitestmöglich verteilt, sodass die Belastung pro Flächeneinheit gering ist. Sofern ein Be- und Entladen über eine Stirnseite gewünscht ist, ist es sinnvoll, die Lastaufnahme zwischen den Seitenebenen zu erstrecken, um die größtmögliche Aufnahmefläche auszunutzen und demnach möglichst vielen Steinblöcke aufnehmen zu können. Eine Ausbildung der Lastaufnahme über einen Teilbereich der Grundfläche ist sinnvoll, sofern weitere Komponenten innerhalb der Aufbaueinheit aufgenommen werden sollen. Demnach können beispielsweise pro Aufbaueinheit ein Steinblock auf der Lastaufnahme sowie zwei Europaletten im Aufnahmeraum neben der Lastaufnahme auf dem Fahrzeug eingebracht werden. Eine verschiebliche Lagerung der Lastaufnahme an dem oberen Randbereich ist ebenfalls vorteilhaft, sodass je nach Situation und gewünschter Verlagerung des Schwerpunktes der Steinblock an verschiedenen Positionen innerhalb des Aufnahmeraums angeordnet ist. Die Lastaufnahme kann weiter entlang der Seitenebenen teleskopierbar ausgebildet sein, sodass je nach Bedarf eine Aufnahmemöglichkeit für einen oder eine Vielzahl an Steinblöcken ausgebildet ist und diese leicht vergrößerbar bzw. verkleinerbar ist. Bevorzugt ist jedoch eine Lastaufnahme, die sich über die gesamte axiale zugängliche Länge des Rahmens erstreckt.

In vorteilhafter Weise umgibt die Lastaufnahme die Rahmeneinheit nur teilweise. Hierdurch kann vollständig auf zusätzliche Komponenten zur Befestigung der Lastaufnahme an der Rahmeneinheit verzichtet werden, was Kosten sowie die Komplexität der Aufbaueinheit reduziert.

In Ausgestaltung der Erfindung ist vorgesehen, dass die mindestens eine erste Öffnung nach oben gerichtet ist und sich über eine erste Stirnebene erstreckt, oder dass die erste Öffnung nach oben gerichtet ist und eine zweite Öffnung parallel zur ersten Stirnebene angeordnet ist. Die erste Öffnung ist insbesondere über die gesamte, vom oberen Randbereich abgeschlossene, Fläche ausgebildet, sodass ein Beladen der Aufbaueinheit von oben ohne weiteres möglich ist und auf Klappen und ähnliche, leicht zu beschädigende und dann die Funktionalität beeinträchtigende Bauteile verzichtet werden kann. Die Aufbaueinheit weist dabei im Vergleich zu den Steinblöcken eine derartige Höhe auf, dass diese unabhängig von deren Lage in der Lastaufnahme maximal zu 20 %, bevorzugt maximal zu 10%, besonders bevorzugt maximal zu 5% über den oberen Randbereich und damit die Aufbaueinheit hinausragen, was ein seitliches Herauskippen zuverlässig verhindert. Sofern sich die erste Öffnung ebenfalls über die Stirnebene erstreckt, bildet diese eine geeignete Öffnung zum Be- und Entladen der Steinblöcke, die zudem nicht über eine gelenkig mit der Aufbaueinheit zu verbindende Klappe verschlossen werden muss. Die Aufbaueinheit ist demnach an zwei nebeneinanderanliegenden und zueinander gewinkelten Flächen mindestens teilweise offen. Sofern die erste Öffnung nach oben und eine zweite Öffnung parallel zur ersten Stirnebene angeordnet ist, ist die Sicherung der Steinblöcke innerhalb der Aufbaueinheit nochmals verbessert, da diese nicht durch eine ansonsten vorhandene, einzige große Öffnung austreten können. Vielmehr sind die beiden Öffnungen derart angeordnet und geformt, dass die Steinblöcke ausschließlich durch gezielte Be- und Entladung aus oder in die Aufbaueinheit gebracht werden können. Zum Abdecken der einen oder der beiden Öffnungen ist eine Plane vorgesehen.

In besonders vorteilhafter Weise ist ein zu den Stirnebenen paralleler Querschnitt der Lastaufnahme in dem Aufnahmeraum mindestens teilweise kettenlinienförmig ausgebildet. Eine Kettenlinienform ist die natürliche, durch die Erdanziehungskraft erzeugte Form eines flexiblen Materials, welches an zwei voneinander beabstandeten Enden festgehalten und ansonsten frei ist. Dies verändert den Querschnitt der Lastaufnahme unter Last nicht oder nur gering, so dass Materialermüdung durch Materialbewegung deutlich vermindert ist. Ein kettenlinienförmiger Querschnitt im Sinne der Erfindung liegt auch dann vor, wenn eine Vielzahl aneinandergereihter, zueinander gewinkelter Geradenabschnitte insgesamt im Wesentlichen die Form einer Kettenlinie bilden. Je mehr Geradenabschnitte und damit Biegebereiche vorhanden sind, umso besser ist die Kettenlinie nachgebildet, jedoch sind aus Kostengründen mindestens 5, vorteilhaft mindestens 10 besonders vorteilhaft mindestens 20 Geradenabschnitte vorgesehen.

Weiter ist vorgesehen, dass die Kettenlinienform des Querschnitts entlang der Seitenebenen nicht konstant ist, insbesondere in einem, zur ersten Stirnebene gerichteten, Lastaufnahmerandbereich sich stetig verkleinernd ist. Dies bildet eine Art Heckschurre aus, welche das Herausgleiten der Steinblöcke verhindert und die aufgrund der Trichterform das Be- und Entladen der Steinblöcke erleichtert. So kann auf eine Klappe oder allgemein auf Sicherungsvorrichtungen der Güter vor einem unbeabsichtigten Heraustreten verzichtet werden.

In Ausgestaltung der Erfindung ist vorgesehen, dass ein zu den Stirnebenen paralleler Querschnitt der Rahmeneinheit U-förmig ist. Eine U-Form verhindert zuverlässig die Berührung der Lastaufnahme und der Rahmeneinheit in einem von dem oberen Randbereich entfernten Bereich. Die Aufbaueinheit ist insgesamt quaderförmig, was deren Verladbarkeit und Adaptierbarkeit auf sämtliche Fahrzeuge sowie ein Stapeln mehrere Aufbaueinheiten übereinander ermöglicht. Unter quaderförmig wird im Sinne der Erfindung eine solche Form der Aufbaueinheit verstanden, die insgesamt sechs Außenflächen aufspannt, wobei davon jeweils zwei einander gegenüberliegend angeordnet sind im Wesentlichen dieselbe Größe aufweisen. Eine V-Form sowie eine Rinnen-, um 90° gedrehte I- oder X-Form sind ebenfalls vorteilhaft, da auch diese eine stabile Struktur der Rahmeneinheit gewährleisten. Deren Schenkel sind dabei so ausgebildet, dass eine Berührung mit der Lastaufnahme ausgeschlossen ist.

Weist die Rahmeneinheit mindestens zwei, vorzugsweise vier, Verladeeinheiten auf, insbesondere mindestens zwei Durchgriffe, so ist mit ganz großem Vorteil eine Querladefähigkeit ermöglicht. Damit ist die Rahmeneinheit leicht von oder auf ein Schienen- und ein Straßenfahrzeug bringbar. Die Durchgriffe sind dabei derart unter der Grundfläche positioniert, dass das Verladen mit einem Kran oder einem Verladefahrzeug durchgeführt werden kann. Art und Abstand der Durchgriffe ist dabei dem Standard nach gewählt. Die Durchgriffe sind in vorteilhafterweise immer paarweise angeordnet.

In Weiterbildung der Erfindung ist vorgesehen, dass in einem unteren Randbereich Greifarmaufnahmen als Verladeeinheiten angeordnet sind, welche ein Verladen der Aufbaueinheit mittels Hebezeugen ermöglichen und erleichtern.

Nachfolgend ist die Erfindung anhand eines Ausführungsbeispiels mittels der Figuren näher beschrieben, wobei
- **Fig. 1**: eine perspektivische Ansicht der Aufbaueinheit und
- **Fig. 2**: eine Schnittansicht der Aufbaueinheit.

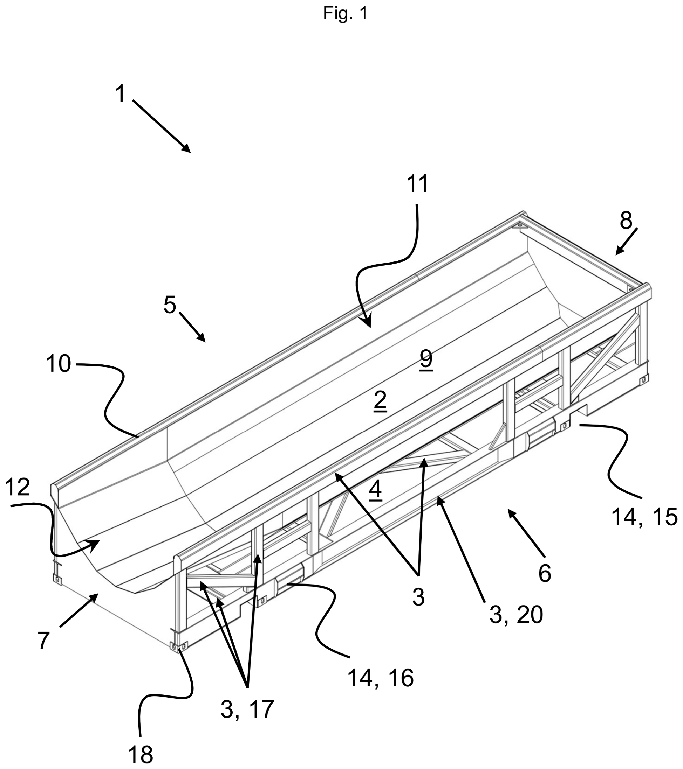

**Fig.** 1 zeigt eine perspektivische Ansicht der Aufbaueinheit 1 mit einer Rahmeneinheit 3 mit einer Vielzahl von Rahmenelementen 17, die in dieser Ausführungsform als Doppel-T-Träger ausgebildet sind und sich sowohl entlang der Grundfläche 4, der Seitenebenen 5, 6, als auch der Stirnebenen 7, 8 erstrecken. Der obere Rand der Rahmeneinheit 3 ist dabei aus gekantetem, hochfestem Stahl gebildet. An einer zur Grundfläche 4 gegenüberliegenden Fläche ist eine erste Öffnung 11 ausgebildet, welche sich über die gesamte von der Rahmeneinheit 3 abgeschlossenen Fläche erstreckt. Die Aufbaueinheit weist darüber hinaus Verladeeinheiten 14 in Form von Durchgriffen 15 und Greifarmaufnahmen 16 auf, wobei die zwei Durchgriffe 15 entlang der Grundfläche 4 zwischen den beiden Seitenebenen 5, 6 verlaufen. Die Durchgriffe 15 sind mittels um 180° gedrehter und mithin nach unten offener U-Träger ausgebildet, sodass entsprechende Verladefahrzeuge in einem Nutzungsfall in diese Durchgriffe 15 eingreifen und die Aufbaueinheit 1 verfahren. Weiter weist die Rahmeneinheit 3 an jeder Unterseite eines senkrechten Rahmenelements 17 ein Corner Casting 18 auf, das insbesondere nach Art einer Containerecke mit unterschiedlich großen Öffnungen ausgebildet ist. Die Greifarmaufnahmen 16 sind ebenfalls in einem unteren Randbereich 20 der Rahmeneinheit 3 ausgebildet und dienen dazu, mit Greifarmen von Hebezeugen in Eingriff gebracht zu werden. Entlang der gesamten oberen quer verlaufenden Rahmenelemente 17, welche entlang der Seitenebenen 5, 6 angeordnet sind, ist die Lastaufnahme 9 angeordnet. Diese umgibt die oberen quer verlaufenden Rahmenelemente 17 derart, dass bei Belastung der Lastaufnahme 9 diese durch den starken aufkommenden Reibwiderstand zwischen Lastaufnahme 9 und Rahmeneinheit 3 im Wesentlichen nicht aneinander gleiten. Vorteilhafterweise sind aufgrund der hohen Anlagefläche zwischen dem oberen querverlaufenden Rahmenelement 17, welches als Latte ausgebildet ist, und der Lastaufnahme 9 die Scherkräfte zwischen diesen so hoch, dass eine kraftschlüssige Verbindung realisiert ist. Diese kraftschlüssige Verbindung bzw. die auftretenden Scherkräfte werden insbesondere durch das Eigengewicht der Lastaufnahme 9 und bei Beladung der Lastaufnahme 9 durch die zusätzliche Gewichtskraft der beladenen Güter, insbesondere der Steinblöcke aufgrund der Erdanziehungskraft realisiert. Eine aufwendige Befestigung der Lastaufnahme 9 an der Rahmeneinheit 3 ist somit vorteilhaft vermeidbar, was Ressourcen spart und die Komplexität des Aufbaus an sich verringert. Alternativ oder ergänzend ist die Lastaufnahme 9 durch eine Schweißverbindung stoffschlüssig mit der Rahmeneinheit 3 verbunden ausgebildet. Die Lastaufnahme 9 ist als ein Metallblech ausgebildet, welches eine durchschnittliche Dicke von 6 mm aufweist. Darüber hinaus sind vorgekantete Schrägen in die Lastaufnahme 9 eingearbeitet, sodass diese innerhalb des Aufnahmeraums 2 mindestens teilweise eine Kettenlinienform aufweist. In einem Lastaufnahmerandbereich 13 weist die Lastaufnahme 9 eine entgegen der Grundfläche 4 gerichtete Schräge auf, sodass die in einem Nutzungsfall zu transportierenden Güter nicht ohne weiteres aus der Lastaufnahme 9 herausrutschen können. Zum Entladen kann die Aufbaueinheit 1 entlang einer parallel zur ersten Stirnebene 7 angeordneten Achse gekippt und so die Steinblöcke durch die Schwerkraft aus der Lastaufnahme 9 ausgebracht werden. Die Lastaufnahme 9 weist zusätzlich zu den Kantungen verschiedene Dicken auf, sodass höhere Belastungen zuverlässig aufnehmbar sind und in Bereichen geringerer Belastung Material eingespart ist. An der gegenüber dem Lastaufnahmerandbereich 13 angeordneten zweiten Stirnebene 8 ist eine Wandung entlang der zweiten Stirnebene 8 zum Abschluss und Verschließen der Lastaufnahme 9 angeordnet. Da eine Entladung nur von einer Seite notwendig ist, ist hier die Steigung der Wandung möglichst groß oder gar senkrecht gewählt, um ein ungewolltes Austreten der Steinblöcke aus der Lastaufnahmen 9 auf dieser Seite in jedem Fall zu verhindern.

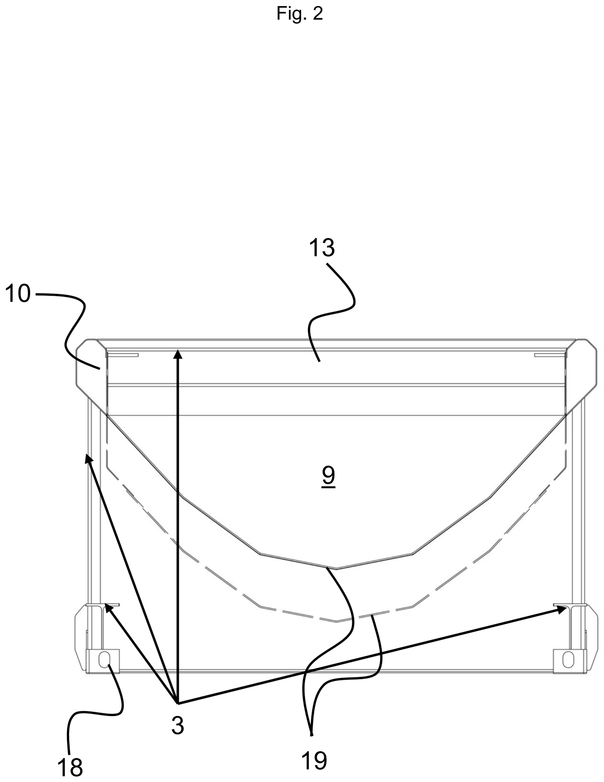

**Fig. 2** zeigt eine Schnittansicht der Aufbaueinheit 1, wobei die Lastaufnahme 9 zum einen eine durch senkrechte Verläufe der Lastaufnahme 9 nach unten versetzte Kettenlinienform und zum anderen in einem Lastaufnahmerandbereich eine direkt an dem oberen Randbereich 10 anliegende Kettenlinienform aufweist, wobei eine Kettenlinienformkante 19 ausgebildet ist, ab der die Kettenlinienform der Lastaufnahme 9 konstant abnimmt, sodass sich eine Art Trichterform ausbildet. Die Längen der senkrechten Verläufe der Lastaufnahme 9 werden innerhalb des Lastaufnahmerandbereichs 13 verringert. Weiter weist die Rahmeneinheit 3 zwischen den Rahmenelementen 17 in einem oberen Randbereich 10 einen größeren Abstand als zwischen den Rahmenelementen 17 entlang der Grundfläche 4 auf. Die Lastaufnahme 9 ist dabei mit Schweißverbindungen an den oberen Trägern der Rahmeneinheit 3 stoffschlüssig befestigt. Weiter weist die Lastaufnahme 9 zu einer Grundfläche 4 einen Abstand auf, sodass auch bei vertikaler Bewegung der Lastaufnahme 9 in Richtung der Grundfläche 4 - beispielsweise durch Ausdehnung oder Verrutschen der Lastaufnahme 9 - sie in keinem Fall die Grundfläche 4 der Rahmeneinheit 3 berührt, da diese nicht zur Aufnahme einer senkrecht auftreffenden Kraft ausgebildet ist. Durch diese Ausgestaltung der Grundfläche 4 sind Materialkosten vermeidbar. Der Abstand zwischen dem zur Grundfläche 4 weisenden, unteren Bereich der Lastaufnahme 9 ist dabei über die axiale Länge der erfindungsgemäßen Vorrichtung unterschiedlich ausgestaltet, insbesondere nach Art einer Heckschurre. Die Rahmeneinheit 3 ist dabei nur in ihrem oberen Bereich mit der Lastaufnahme 9 verbunden.

Die Erfindung kombiniert einen massiven Rahmen mit einer dazu eher nach Art einer Membrane oder "Hängematte" ausgebildeten Lastaufnahme, die am Rahmen bevorzugt stoffschlüssig befestigt ist. Diese berührt dabei den unteren Bodenrahmen nicht, der die Schnittstelle zu Wagon, Fahrzeug und Kränen bildet und daher mit Vorteil nicht durch die im Benutzungsfall aufgenommenen Lasten belastet wird.

### BEZUGSZEICHENLISTE

- 1: Aufbaueinheit
- 2: Aufnahmeraum
- 3: Rahmeneinheit
- 4: Grundfläche
- 5: erste Seitenebene
- 6: zweite Seitenebene
- 7: erste Stirnebene
- 8: zweite Stirnebene
- 9: Lastaufnahme
- 10: oberer Randbereich
- 11: erste Öffnung
- 12: zweite Öffnung
- 13: Lastaufnahmerandbereich
- 14: Verladeeinheit
- 15: Durchgriffe
- 16: Greifarmaufnahme
- 17: Rahmenelement
- 18: Corner Casting
- 19: Kettenlinienformkante
- 20: unterer Bereich

## Patentansprüche

1. Aufbaueinheit (1) für Schienen- und Kraftfahrzeuge zum Transport von Steinblöcken aufweisend eine, einen Aufnahmeraum (2) aufspannende, Rahmeneinheit (3), wobei die Rahmeneinheit (3) eine Grundfläche (4), zwei einander gegenüberliegende Seitenebenen (5, 6) und zwei, jeweils orthogonal zu beiden Seitenebenen (5, 6) angeordnete, Stirnebenen (7, 8) definiert und mindestens eine in dem Aufnahmeraum (2) angeordnete flexible Lastaufnahme (9) aufweist, wobei die Lastaufnahme (9) ausschließlich in einem oberen Randbereich (10) der Rahmeneinheit (3) an dieser anliegt und Lastaufnahme (9) und Rahmeneinheit (3) in dem oberen Randbereich (10) kraft-, stoff- oder formschlüssig miteinander verbunden sind, wobei die Lastaufnahme (9) mindestens eine erste Öffnung (11) aufweist und wobei die Lastaufnahme (9) aus einem verschleiß- und abriebfesten Material, gebildet ist.

2. Aufbaueinheit (1) nach Anspruch 1, **dadurch gekennzeichnet, dass** sich die Lastaufnahme (9) zwischen den Seitenebenen (5, 6) erstreckt, insbesondere sich über die gesamte Grundfläche (4) der Rahmeneinheit (3) erstreckt und/oder wobei das Material der Lastaufnahme (9) ein Stahl mit extrahoher Zähigkeit ist.

3. Aufbaueinheit (1) nach Anspruch 1 oder 2, **dadurch gekennzeichnet, dass** die Lastaufnahme (9) die Rahmeneinheit (3) nur teilweise umgibt.

4. Aufbaueinheit (1) nach Anspruch 1, 2 oder 3, **dadurch gekennzeichnet, dass** die mindestens eine erste Öffnung (11) nach oben gerichtet ist und sich über eine erste Stirnebene (7) erstreckt, oder dass die erste Öffnung (11) nach oben gerichtet ist und eine zweite Öffnung (12) parallel zur ersten Stirnebene (7) angeordnet ist.

5. Aufbaueinheit (1) nach einem der vorhergehenden Ansprüche, **dadurch gekennzeichnet, dass** ein zu den Stirnebenen (7, 8) paralleler Querschnitt der Lastaufnahme (9) in dem Aufnahmeraum (2) mindestens teilweise kettenlinienförmig ist.

6. Aufbaueinheit (1) nach Anspruch 5, **dadurch gekennzeichnet, dass** die Kettenlinienform des Querschnitts entlang der Seitenebenen (5, 6) nicht konstant ist, insbesondere in einem, zur ersten Stirnebene (7) gerichteten, Lastaufnahmerandbereich (13) stetig verkleinert ist.

7. Aufbaueinheit (1) nach einem der vorhergehenden Ansprüche, **dadurch gekennzeichnet, dass** ein zu den Stirnebenen (7, 8) paralleler Querschnitt der Rahmeneinheit (3) u-förmig ist.

8. Aufbaueinheit (1) nach einem der vorhergehenden Ansprüche, **dadurch gekennzeichnet, dass** die Rahmeneinheit (3) mindestens zwei, vorzugsweise vier, Verladeeinheiten (14), insbesondere mindestens zwei Durchgriffe (15) aufweist.

9. Aufbaueinheit (1) nach einem der vorhergehenden Ansprüche, **dadurch gekennzeichnet, dass** die Durchgriffe (15) in einem unteren Bereich (20) der Rahmeneinheit (3) angeordnet sind.

10. Aufbaueinheit (1) nach Anspruch 8, **dadurch** g**ekennzeichnet,** dass die Verladeeinheiten (14) als Greifarmaufnahme (16) ausgebildet und in einem unteren Bereich (20) der Rahmeneinheit (3) angeordnet sind.
